Europäisches Patentamt

European Patent Office

Office européen des brevets

(11) Publication number: **0 081 888**
**B1**

(12) **EUROPEAN PATENT SPECIFICATION**

(45) Date of publication of patent specification: **27.08.86**

(51) Int. Cl.⁴: **C 08 F 2/60, C 09 D 3/16**

(21) Application number: **82201595.4**

(22) Date of filing: **14.12.82**

(54) Resins and their use in coating compositions.

(30) Priority: **17.12.81 NL 8105690**

(43) Date of publication of application:
**22.06.83 Bulletin 83/25**

(45) Publication of the grant of the patent:
**27.08.86 Bulletin 86/35**

(84) Designated Contracting States:
**DE FR NL**

(56) References cited:
**US-A-2 452 992**
**US-A-3 188 303**
**US-A-3 810 285**

The file contains technical information
submitted after the application was filed and
not included in this specification

(73) Proprietor: **DSM RESINS BV**
**Ceintuurbaan 5**
**NL-8022 AW Zwolle (NL)**

(72) Inventor: **Runavot, Yves**
**204, Boulevard de Créteil**
**F-94100 St Maur des Fossés (FR)**
Inventor: **Billault, Georges**
**5, Rue Ottino**
**F-93000 Saint Ouen (FR)**
Inventor: **Salvetat, Jacques**
**27, Avenue Corot**
**F-78000 Le Vésinet (FR)**
Inventor: **Hanslin, Robert Aenis**
**17, Rue de Montlhery**
**F-91360 Villemoisson sur Orge (FR)**

(74) Representative: **van Leeuwen, Hendrik**
**Bernardus et al**
**Octrooibureau DSM Postbus 9**
**NL-6160 MA Geleen (NL)**

Courier Press, Leamington Spa, England.

EP 0 081 888 B1

## Description

This invention relates to resins, more particularly to resinous reaction products of dicyclopentadiene and an alpha-beta unsaturated dicarboxylic acid and their use in coating compositions.

It is widely known that dicyclopentadiene (DCPD) reacts with the anhydride of an alpha-beta unsaturated dicarboxylic acid like maleic anhydride to form resinous reaction products.

This reaction is sometimes carried out at temperatures above 170°C (i.e. the temperature above which dicyclopentadiene dedimerizes) and sometimes below 170°C. US—A—3 890 285 (=NL—A—7314422) Nippon Oil, describes such a reaction being carried out at 270°C, resulting in products with an acid value of about 200.

Free radical initiators are sometimes used. The reaction is usually of the Diels-Alder type. The resins obtained contain cyclopentadiene and anhydride groups. Such products are, inter alia, disclosed in US—A—3 188 303, J. J. Dissen, and these products also must shown a high acid value.

The reaction of a dicyclopentadiene and an alpha-beta unsaturated dicarboxylic acid is less known. Such a reaction product is mentioned in US Patent Specification 2 452 992, however without giving details. This reaction may lead to the formation of ester-type addition products in which one or two dicyclopentadiene molecules are attached to the dicarboxylic acid by means of ester groups.

It has now been found that certain resinous reaction products of a dicyclopentadiene and an alpha-beta unsaturated dicarboxylic acid are novel and valuable compounds which are useful in coating compositions, more in particular in varnishes of the nitrocellulose type.

These resins obtainable by the process characterized below are substantially the reaction product of 1.5—2.5 moles of a dicyclopentadienc per mole of alpha-beta unsaturated dicarboxylic acid, which resin has an average molecular weight of 600—900, an acid value of 70—100, a saponification value of 250—300, a bromine value of 60—100 and softening point of 100—160°C.

The molecular weight is determined by cryoscopy, the acid value according to ASTM Cd 3a-63, the saponification value according to ASTM Cd-3-25, the bromine value according to ASTM D 1491-78 and the softening point by Ring & Ball according to ASTM-E28-67.

A dicyclopentadiene comprises methyldicyclopentadienes and (unsubstituted) dicyclopentadiene.

An alpha-beta unsaturated dicarboxylic acid comprises any $C_4$—$C_{10}$ alpha-beta unsaturated dicarboxylic acid, such as maleic acid, fumaric acid, citraconic acid and the like. In particular the cis-isomers are preferred. There is no necessity to use the free acid itself as the starting material for the reaction, because it may well be more convenient to form the free acid in situ, e.g. from its anhydride and the appropriate amount of water.

The reactants may be used in the pure form but also as technical grades containing 60—95% of the pure chemical, in particular with dicyclopentadiene. Preferably 1.75 to 2.25 moles of a dicyclopentadiene are used per mole of alpha-beta unsaturated dicarboxylic acid.

A convenient process for preparing this resinous reaction product is by reacting the appropriate molar amounts of a dicyclopentadiene and alpha-beta unsaturated dicarboxylic acid, optionally in the presence of a small amount of acid catalyst at a temperature of 100—140°C, preferably 115—130°C, so as to form ester-type reaction products, followed by increasing the reaction temperature to 175°—250°C so as to obtain cyclopentadiene by cracking of dicyclopentadiene, followed by Diels-Alder addition of cyclopentadiene and dicyclopentadiene to the unsaturated esters formed in the first phase of the reaction.

Although various substituted dicyclopentadienes can·be used in this reaction, it is preferred to use unsubstituted dicyclopentadiene having a purity of at least 85%, preferably at least 90%.

Although it is advantageous to use a minor amount of acid catalyst, say 0.5—5 o/oo of the total charge, this is not a requirement, unless the dicarboxylic acid is extremely weak. Various acid catalysts can be used but mineral acid, in particular phosphoric acid, is preferred.

The progress of the reaction can be conveniently followed by means of taking samples and establishing the softening point. At the end of the reaction volatiles were stripped off.

The intermediate ester mixture is normally a yellow oil and the reaction product a brittle yellow resin with characteristics set out above.

The resin has a polar character and can be used in adhesives, printing inks and the like, depending on its softening point, which in turn is determined by the progress of the second reaction step (Diels-Alder) and the amount of excess (di)cyclopentadiene available. The resin can be used with advantage in coating compositions, in particular varnishes of the nitrocellulose type, where it imparts valuable properties, in particular hardness. Also it is a valuable extender of alkyds and a subsitute for natural resins. In coating compositions such as varnishes 5—25% of the total composition, i.e. up to about 50% of the total solids content, may consist of the DCPD-dicarboxylic acid adduct. The remainder of the varnish is usually made up of nitrocellulose, alkyds and various organic solvents and sometimes other adjuncts.

The invention is illustrated by the following example.

Example 1

Into a 2-litre round-bottomed flask equipped with a thermometer, a stirring device and a reflux condenser, two moles of dicyclopentadiene (abt.

92% purity), 1 mole of maleic anhydride and water in an amount just sufficient for the formation of the free dicarboxylic acid and 1 o/oo by weight of phosphoric acid were introduced. The reaction mixture was heated to a temperature of 120—125°C with stirring and maintained at said temperature for 4 hours, which resulted in the formation of a mixture of ester and diester. This ester mixture was a yellowish oil. Subsequently the reaction temperature was slowly raised to 175°C, with continuous stirring, which temperature was maintained for 3 hours. By increasing the temperature, the excess of free dicyclopentadiene was cracked to form cyclopentadiene, which then combined according to a Diels-Alder reaction with ester and diester which had been formed previously.

The progress of this reaction was followed by regularly determining the softening point (ring and Ball ASTM D 1491—78) after removal of the non-reactive products by distillation and the reaction was stopped at a softening point of 70—125°C, in this particular case at 120°C, at which point the hard yellow resin had a Gardner colour of 11, an average molecular weight of about 700 (cryoscopic), a saponification value of 290 and a bromine value of 90.

In case technical grade DCPD of about 70% purity was used, a similar resin was obtained, however with a slightly lower softening point.

The resin based on 92% pure DCPD was used in the following nitrocellulose varnish composition:

26.3 parts by weight of nitrocellulse (relative viscosity of 1/4 second according to the Hercules method in a 40% solvent mixture of ethanol, toluene and ethyl acetate)
26.3 parts by weight of butyle acetate
12.5 parts by weight of ethyl acetate
12.5 parts by weight of air-drying alkyl (60% in butyl acetate)
13.5 parts by weight of dicyclopentadiene/maleic acid resin (above)
2.5 parts by weight of butanol
6.4 parts by weight of methyl isobutyl ketone.

This nitrocellulose varnish was quick-drying, in 45 minutes dust-free and in 60 minutes fingerprint-dry, and the hardness (Persoz) was quite satisfactory, viz.:

31 seconds after 2 hours
1 min. 28 seconds after 7 hours
2 min. 20 seconds after 24 hours
3 min. 10 seconds after 48 hours.

## Claims

1. The resinous reaction product of 1.5—2.5 moles of a dicyclopentadiene per mole of alpha-beta unsaturated dicarboxylic acid, which resin has an average molecular weight of 600—900, an acid value of 70—100, a saponification index of 250—300, a bromine index of 60—100 and softening point of 100—160°C, and which is obtainable by reacting dicyclopentadiene and alpha-beta unsaturated dicarboxylic acid, optionally in the presence of a small amount of acid catayst, at a temperature of 100—140°C, so as to form ester-type addition products, followed by increasing the reaction temperature to 175—250°C so as to obtain a cyclopentadiene by cracking of dicyclopentadiene, followed by Diels-Adler addition of cyclopentadiene and dicyclopentadiene to the unsaturated esters formed in the first phase.

2. The resinous reaction product according to claim 1 in which 1.75—2.25 moles of dicyclopentadiene are used per mole of alpha-beta unsaturated dicarboxylic acid.

3. A process for preparing a resinous product by reacting dicyclopentadiene and alpha-beta unsaturated dicarboxylic acid, optionally in the presence of a small amount of acid catalyst, characterized in that dicyclopentadiene and alpha-beta unsaturated dicarboxylic acid are first reacted at a temperature of 100—140°C, preferably 115—130°C, so as to form ester-type addition products, followed by increasing the reaction temperature to 175—250°C so as to obtain a cyclopentadiene by cracking of dicyclopentadiene, followed by Diels-Adler addition of cyclopentadiene and dicyclopentadiene to the unsaturated esters formed in the first phase.

4. A process according to claim 3, in which unsubstituted dicyclopentadiene is used.

5. A process according to claim 3 or 4, in which the acid catalyst is a mineral acid.

6. A process according to claim 3 or 4, in which the alpha-beta unsaturated acid is maleic acid.

7. A solvent-based varnish comprising nitrocellulose, a solvent and a resin as defined in claim 1 or 2.

## Patentansprüche

1. Harzartiges Reaktionsprodukt von 1,5—2,5 Mol eines Dicyclopentadiens je Mol alpha-betaungesättigter Dicarbonsäure, welches Harz ein durchschnittliches Molekulargewicht von 600—900, eine Säurezahl von 70—100, einen Verseifungsindex von 250—300, einen Bromindex von 60—100 und einen Erweichungspunkt von 100—160°C hat, und welches erhätlich ist durch Umsetzen von Dicyclopentadien und alpha-betaungesättigter Carbonsäure, gegebenenfalls in Gegenwart einer kleinen Menge an saurem Katalysator, bei einer Temperatur von 100—140°C, so daß Additionsprodukte vom Estertyp gebildet werden, gefolgt von der Erhöhung der Reaktionstemperatur auf 175—250°C, so daß ein Cyclopentadien durch Cracken von Dicyclopentadien erhalten wird, gefolgt von Diels - Alders - Addition von Cyclopentadien und Dicyclopentadien an die in der ersten Phase gebildeten ungesättigten Ester.

2. Harzartiges Reaktionsprodukt gemäß Anspruch 1, in welchem 1,75—2,25 Mol Dicyclopentadien je Mol alpha - beta - ungesättigter Dicarbonsäure verwendet engesetzt worden sind.

3. Verfahren zur Herstellung eines harzartigen Produkts durch Umsetzung von Dicyclopentadien und alpha - beta - ungesättigter Dicarbonsäure, gegebenenfalls in Gegenwart einer kleinen Menge an saurem Katalysator, dadurch gekennzeichnet, daß Dicyclopentadien und alpha - beta - ungesättigte Dicarbonsäure zuerst bei einer Temperatur von 100—140°C, vorzugsweise 115—130°C umgesetzt werden, so daß Additionsprodukte vom Estertyp gebildet werden, gefolgt von der Erhöhung der Reaktionstemperatur auf 175—250°C, so daß ein Cyclopentadien durch Cracken von Dicyclopentadien erhalten wird, gefolgt von Diels - Alder - Addition von Cyclopentadien und Dicyclopentadien an den in der ersten Phase gebildeten ungesättigten Ester.

4. Verfahren nach Anspruch 3, dadurch gekennzeichnet, daß unsubstituiertes Dicyclopentadien eingesetzt wird.

5. Verfahren nach Anspruch 3 oder 4, dadurch gekennzeichnet, daß der saure Katalysator eine Mineralsäure ist.

6. Verfahren nach Anspruch 3 oder 4, dadurch gekennzeichnet, daß die alpha - beta - ungesättigte Säure Maleinsäure ist.

7. Lack auf Lösungsmittelbasis umfassend Nitrocellulose, ein Lösungsmittel und ein Harz wie in Anspruch 1 oder 2 definiert.

**Revendications**

1. Produit de réaction résineux de 1,5—2,5 moles d'un dicyclopentadiène par mole d'acide dicarboxylique à insaturation alpha, bêta, résine qui présente un poids moléculaire moyen de 600 à 900, un indice d'acide de 70 à 100, un indice de saponification de 250 à 300, un indice de brome de 60 à 100 et un point de ramollissement de 100 à 160°C et qu'on obtient en faisant réagir du dicyclopentadiène et un acide dicarboxylique à insaturation alph, bêta, facultativement en présence d'une petite quantité d'un catalyseur acide, à une température de 100 à 140°C, de manière à former des produits d'addition du type esters, après quoi on augmente la température de réaction à 175—250°C pour obtenir un cyclopentadiène par craquage de dicyclopentadiène qu'on on fait suivre d'une addition Diels-Alder de cyclopentadiène et de dicyclopentadiène aux esters insaturés formés la première phase.

2. Produit de réaction résineux selon la revendication 1, dans lequel on utilise 1,75 à 2,25 moles de dicyclopentadiène par mole d'acide dicarboxylique à insaturation alpha, bêta.

3. Procédé de préparation d'un produit résineux par réaction de dicyclopentadiène et d'acide dicarboxylique à insaturation alpha, bêta, facultativement en présence d'une petite quantité d'un catalyseur acide, caractérisé en ce qu'on fait d'abord réagir le dicyclopentadiène et l'acide dicarboxylique à insaturation alpha, bêta à une température de 100—140°C, de préférence 115 à 130°C de manière à former des produits d'addition du type ester, puis on augmente la température de réaction à 175—250°C de mainière à obtenir un cyclopentadiène par craquage du dicyclopentadiène, suivi d'une addition Diels-Alder de cyclopentadiène et de dicyclopentadiène aux esters insaturés formés dans la première phase.

4. Procédé selon la revendication 3, dans lequel on utilise un dicyclopentadiène non substitué.

5. Procédé selon la revendication 3 ou 4, dans lequel le catalyseur acide est un acide minéral.

6. Procédé selon la revendication 3 ou 4, dans lequel l'acide à insaturation alpha, bêta est l'acide maléique.

7. Vernis à base de solvant comprenant de la nitrocellulose, un solvant et une résine selon la revendication 1 ou 2.